# EUROPÄISCHE PATENTSCHRIFT

(11) **EP 0 826 871 B1**
(45) Veröffentlichungstag und Bekanntmachung des Hinweises auf die Patenterteilung: **21.03.2001**
(21) Anmeldenummer: 97114424.1
(22) Anmeldetag: 21.08.1997
(51) Int. Cl.: F02F 1/38

(54) **Gegossener Zylinderkopf einer mehrzylindrigen Brennkraftmaschine**
Cast cylinder head for a multi-cylinder combustion engine
Culasse moulé pour un moteur à combustion interne à plusieurs cylindres

(30) Priorität: 02.09.1996 DE 19635535
(43) Veröffentlichungstag der Anmeldung: 04.03.1998
(73) Patentinhaber: DaimlerChrysler AG, 70567 Stuttgart (DE)
(72) Erfinder: Kwiatkowski, Janusz, 70176 Stuttgart (DE); Zaiss, Eduard, 70327 Stuttgart (DE)

(56) Entgegenhaltungen:
- DE-A- 3 127 082
- DE-U- 8 914 153
- FR-A- 2 202 534
- FR-A- 2 549 528

## Beschreibung

Die Erfindung bezieht sich auf einen gegossenen Zylinderkopf einer mehrzylindrigen Brennkraftmaschine gemäß dem Oberbegriff des Patentanspruchs 1.

Es ist bekannt, im Zylinderkopf ein Kanalsystem zum Zuführen von Sekundärluft vorzusehen. Die Sekundärlufteinblasung dient zur Abgasnachbehandlung der Abgase von Brennkraftmaschinen durch thermische Nachverbrennung. Mit der Einblasung von Luftsauerstoff (Sekundärluft) lassen sich die im Abgas noch vorhandenen unverbrannten HC- und CO-Anteile durch eine gewisse Verweilzeit bei hohen Temperaturen nachverbrennen. Die thermische Nachbehandlung des Abgases mit Sekundärlufteinblasung spielt, insbesondere während der Warmlaufphase einer Brennkraftmaschine in Kombination mit einem Katalysator, eine wesentliche Rolle, um die Aufheizzeit bis zum Erreichen der Betriebstemperatur des Katalysators deutlich zu verkürzen. Vorteilhafterweise erfolgt die Sekundärlufteinblasung im Zylinderkopf direkt in die Auslaßkanäle in unmittelbarer Nähe zu den Auslaßventilen.

So zeigt die DE 31 27 082 A1 einen gattungsgemäßen zylinderkopf einer mehrzylindrigen Brennkraftmaschine, der ein entsprechendes Kanalsystem zum Zuführen von Sekundärluft aufweist. Der Zylinderkopf umfaßt einen gasführenden Längskanal (Sekundärluftkanal) von dem mehrere auf Abstand zueinander liegende Verbindungskanäle ausgehen, die jeweils in einen Auslaßkanal münden. Die Kanäle sind im Zylinderkopf gebohrt oder durch im Zylinderkopf eingegossene Rohre gebildet und verteuern die Herstellung des Zylinderkopfes erheblich.

Zum allgemeinen technischen Hintergrund wird noch auf die DE 43 44 356 A1 verwiesen.

Es ist die Aufgabe der Erfindung einen Zylinderkopf derart auszubilden, daß eine vereinfachte und damit kostengünstigere Herstellung gewährleistet ist.

Diese Aufgabe wird erfindungsgemäß durch die im Kennzeichen des Patentanspruchs 1 gegebenen Merkmale gelöst.

Ein wesentlicher Vorteil der Erfindung liegt in der vereinfachten Herstellung des Zylinderkopfes, der ein Kanalsystem zur Lufteinblasung aufweist, das einen gasführenden Längskanal und Verbindungskanäle umfaßt. Ein gemeinsamer Gießkern dient zur gleichzeitigen Herstellung des Kanalsystems und der Gaswechselkanäle des Zylinderkopfes, so daß sowohl Bearbeitungsverfahren, wie beispielsweise das Bohren des gasführenden Längskanals, als auch die Einlage von Einzelkernen entfallen können. Eine exaktere Lage der Gaswechselkanäle, auch zueinander, ist dadurch gewährleistet. Desweiteren ermöglicht das Gießen freie Gestaltungsmöglichkeiten des Kanalsystems zur Lufteinblasung, insbesondere einen beliebigen Verlauf des gasführenden Luftkanals, so daß der Kühlwasserraum des Zylinderkopfes weitgehend unbeeinträchtigt bleiben kann.

Ein weiterer Vorteil liegt in den Anwendungsmöglichkeiten des Kanalsystems. Das Kanalsystem kann sowohl zur Sekundärlufteinblasung als auch zur Abgasrückführung ausgebildet werden. Zur Sekundärlufteinblasung bildet der gasführende Längskanal einen Sekundärluftkanal, von dem Verbindungskanäle ausgehen, die jeweils in einen Auslaßkanal münden. Zur Abgasrückführung bildet der gasführende Längskanal einen Abgasrückführungskanal, von dem ebenfalls Verbindungskanäle ausgehen, die jeweils in einen Einlaßkanal münden.

Weitere Ausgestaltungen und Vorteile gehen aus der Beschreibung hervor.

Ein Ausführungsbeispiel der Erfindung ist im folgenden in zwei Zeichnungen mit weiteren Einzelheiten näher erläutert, und zwar zeigen:
- Fig. 1: einen Querschnitt durch einen erfindungsgemäßen Zylinderkopf mit Gaswechselkanälen, die über Verbindungskanäle mit einem gasführenden Längskanal verbunden sind und
- Fig. 2: den Zylinderkopf im Längsschnitt gemäß der Linie II-II aus Fig. 1.

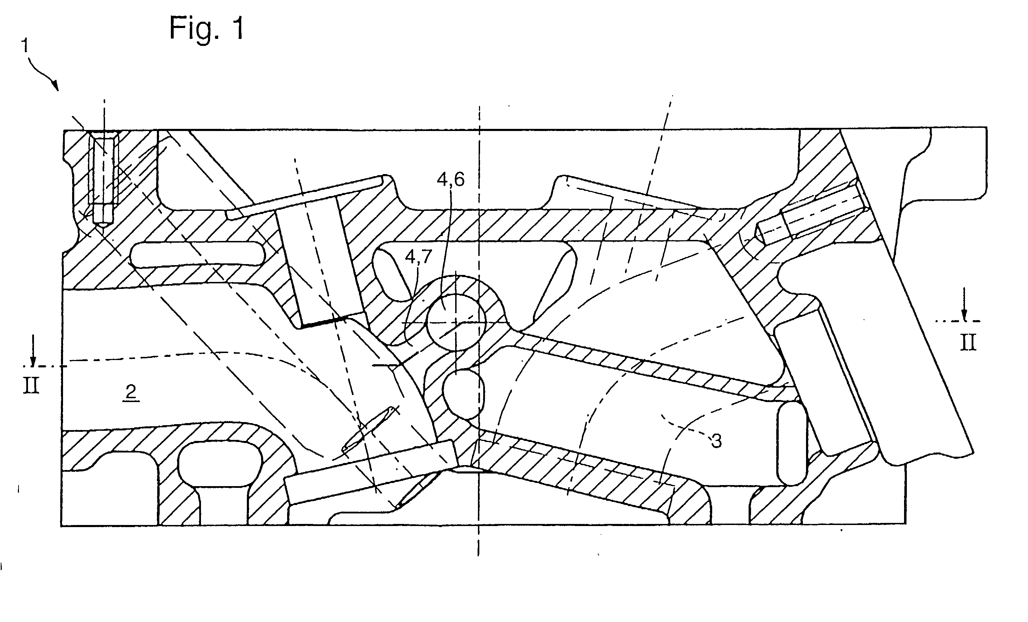

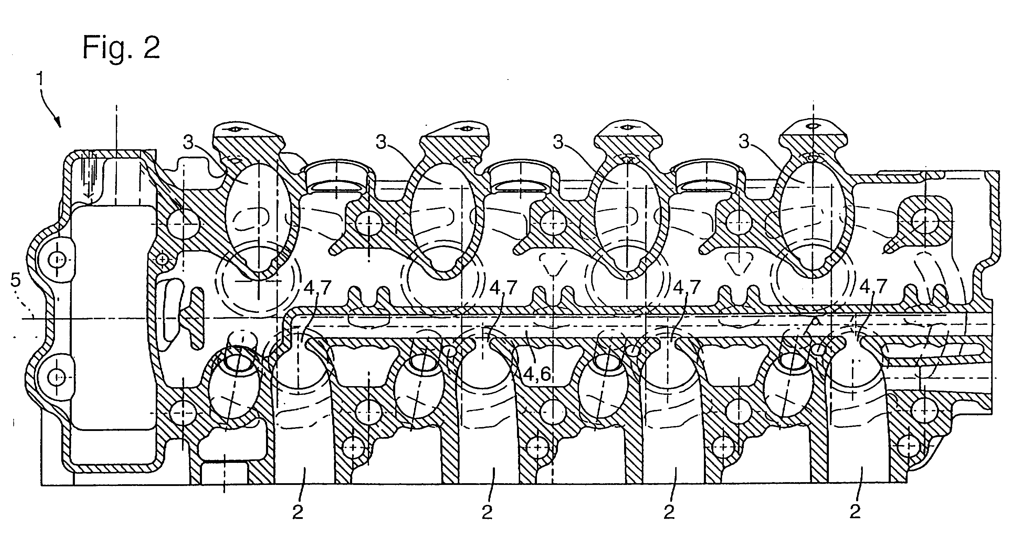

In den beiden Figuren 1 und 2 ist ein gegossener Zylinderkopf 1 für eine hier nicht näher dargestellte mehrzylindrige Brennkraftmaschine mit Gaswechselkanälen 2, 3 und mindestens einem Kanalsystem 4 zur Lufteinblasung gezeigt. Das Kanalsystem 4 umfaßt einen in Richtung einer Motorlängsachse 5 verlaufenden gasführenden Längskanal 6, von dem Verbindungskanäle 7 ausgehen, die jeweils in einen Gaswechselkanal 2, 3 münden.

Im vorliegenden Fall dient das Kanalsystem 4 zur Sekundärlufteinblasung, wobei der gasführende Längskanal 6 einen Sekundärluftkanal bildet, von dem die Verbindungskanäle 7 ausgehen, die jeweils in einen Auslaßkanal 2 münden.

Auf diese Weise kann auch zusätzlich zum Kanalsystem zur Sekundärlufteinblasung ein ähnliches Kanalsystem an die Einlaßkanäle des Zylinderkopfes angeschlossen werden und zur Abgasrückführung benutzt werden. In diesem Fall weist das Kanalsystem einen gasführenden Längskanal auf, der als Abgasrückführungskanal ausgebildet ist. Von dem Abgasrückführungskanal gehen ebenfalls voneinander beabstandete Verbindungskanäle aus, die in die Einlaßkanäle münden. Weist ein Zylinderkopf beide Kanalsysteme auf, so können der Sekundärluftkanal und der Abgasrückführungskanal über einen weiteren Kanal miteinander verbunden sein.

Die Gaswechselkanäle 2 und 3, der gasführende Längskanal 6 und die Verbindungskanäle 7 sind durch Gießkerne gebildet, die erfindungsgemäß zu einem einteiligen Gießkern ausgebildet sind.

Sind beide Kanalsysteme gleichzeitig im Zylinderkopf vorhanden, wäre auch denkbar, daß die Gießkerne, die den Abgasrückführungskanal, den Sekundärluftkanal, die Verbindungskanäle, sämtliche Gaswechselkanäle sowie eventuell den Kanal, der den Sekundärluftkanal und den Abgasrückführungskanal verbindet, bilden, ebenfalls zu einem einteiligen Gießkern vereinigt sind.

## Patentansprüche

1. Gegossener Zylinderkopf einer mehrzylindrigen Brennkraftmaschine mit Gaswechselkanälen und mindestens einem gasführenden Längskanal, von dem Verbindungskanäle ausgehen, die jeweils in einen Gaswechselkanal münden, wobei die Gaswechselkanäle durch Gießkerne gebildet sind,
**dadurch gekennzeichnet,**
**daß** der gasführende Längskanal (6) und die Verbindungskanäle (7) ebenfalls durch Gießkerne gebildet sind, die mit den Gießkernen der Gaswechselkanäle (2, 3) einteilig ausgebildet sind.

2. Zylinderkopf nach Anspruch 1,
**dadurch gekennzeichnet,**
**daß** der gasführende Längskanal (6) einen Sekundärluftkanal bildet, von dem die Verbindungskanäle (7) ausgehen, die jeweils in einen Auslaßkanal (2) münden.

3. Zylinderkopf nach Anspruch 1 oder 2,
**dadurch gekennzeichnet,**
**daß** der gasführende Längskanal (6) einen Abgasrückführungskanal bildet, von dem die Verbindungskanäle (7) ausgehen, die jeweils in einen Einlaßkanal (3) münden.

## Claims

1. Cast cylinder head of a multi-cylinder internal combustion engine with gas exchange passages and at least one gas-guiding longitudinal passage from which connecting passages branch and open respectively into a gas exchange passage, the gas exchange passages being formed by cast cores,
**characterised in that**
the gas-guiding longitudinal passage (6) and the connecting passages (7) are also formed by cast cores which are made in a single piece with the cast cores of the gas exchange passages (2, 3).

2. Cylinder head as claimed in claim 1,
**characterised in that**
the gas-guiding longitudinal passage (6) forms a secondary air passage, from which the connecting passages (7) branch and open respectively into an outlet passage (2).

3. Cylinder head as claimed in claim 1 or 2,
**characterised in that**
the gas-guiding longitudinal passage (6) forms an exhaust gas return passage, from which the connecting passages (7) branch and open respectively into an inlet passage (3).

## Revendications

1. Culasse moulée d'un moteur à combustion interne multicylindres, avec des canaux de changement des gaz et au moins un canal longitudinal assurant le guidage des gaz, d'où partent des canaux de liaison qui débouchent chacun dans un canal de changement des gaz, les canaux de changement des gaz étant constitués par des noyaux de moulage,
caractérisé en ce que le canal longitudinal (6) assurant le guidage des gaz et les canaux de liaison (7) sont également constitués par des noyaux de moulage, réalisés d'une seule pièce avec les noyaux de moulage des canaux de changements des gaz (2, 3).

2. Culasse selon la revendication 1, caractérisée en ce que le canal longitudinal (6) assurant le guidage des gaz constitue un canal d'air secondaire, d'où partent les canaux de liaison (7) débouchant chacun dans un canal d'échappement (2).

3. Culasse selon la revendication 1 ou 2, caractérisée en ce que le canal longitudinal (6) assurant le guidage des gaz constitue un canal de recyclage des gaz d'échappement, d'où partent les canaux de liaison (7) débouchant chacun dans un canal d'admission (3).
